# EUROPEAN PATENT APPLICATION

(11) **EP 2 786 681 A1**
(43) Date of publication of application: **08.10.2014**
(21) Application number: 14151993.4
(22) Date of filing: 24.04.2008
(51) Int. Cl.: A47J 31/40, B65D 85/804, A47J 31/06

(54) **A device and a method for preparing a ready to use liquid product**

(30) Priority: 24.04.2007 WO PCT/NL2007/050178
(62) Divisional of application: 08741662.4
(71) Applicant: N.V. Nutricia, 2712 HM Zoetermeer (NL)
(72) Inventor: van Puijenbroek, Alexander Josephus Maricus, 6704 PH Wageningen (NL); Hageman, Robert Johan Joseph, 6705 CT Wageningen (NL)
(74) Representative: Nederlandsch Octrooibureau

(57) **Abstract**

The invention relates to a device (10) for preparing a ready to use liquid product from a semifinished product, said semi -finished arranged in a first container (1) the device comprising an injector (2) for supplying an amount of liquid in the first container thereby providing the ready to use liquid product, wherein the injector is arranged for evacuating the ready to use liquid product from the first container (1) into a second container (9).

## Description

### FIELD OF THE INVENTION

The invention relates to a device for preparing a ready to use liquid product from a semi-finished product arranged in a first container, the device comprising an injector for supplying an amount of liquid in the first container thereby providing the ready to use liquid product.

The invention further relates to a method for preparing a ready to use liquid product from a semi-finished product, said semi-finished product being arranged in a first container.

### BACKGROUND OF THE INVENTION

An embodiment of the device as is set forth in the opening paragraph is known from EP 1574 452 A2. The known device comprises a first container, notably a closed capsule, arranged with a semi-finished product, for example instant coffee. The upper surface of the capsule is sealed to protect the semi-finished product from the atmosphere. The known device further comprises an injector for puncturing the capsule and for injecting a suitable fluid under pressure in the capsule. The capsule is arranged with its own opening means activated by the rise of pressure of the fluid introduced into the capsule at the time of extraction. For this reason the known device is provided with a capsule retaining unit, designed to be substantially complementary in shape to a shape of the capsule. Alternatively, the capsule may be arranged with ducting means for conducting the ready to use product into the second container.

It is a disadvantage of the known device in that specific measures have to be undertaken with respect to the construction of the device for enabling proper operation thereof, increasing a device costs and decreasing interchangeability of suitable first containers of various shapes or materials.

### SUMMARY

It is an object of the invention to provide a safe device for hygienic preparing a ready to use liquid product which can be instantly prepared by relatively simple means, operation of the device being substantially invariant with respect to different shapes or materials of the first containers.

In particular it is aimed to provide a device whereby the removal of the contents from the first container occurs at near ambient pressure to allow a safe operation and more freedom of choice in design and type of materials for the first container.

To this end in the device according to the invention the injector is further arranged for evacuating the ready to use liquid product from the first container into a second container.

In accordance with the technical measure of the invention the injector is provided for cooperating with a notably fixed injector, said punch having a double function, namely for supplying a suitable liquid in the first container and, secondly, for evacuating the just prepared ready to use liquid product to the second container. Preferably, the evacuation is carried out substantially immediately after the ready to use liquid product is prepared.

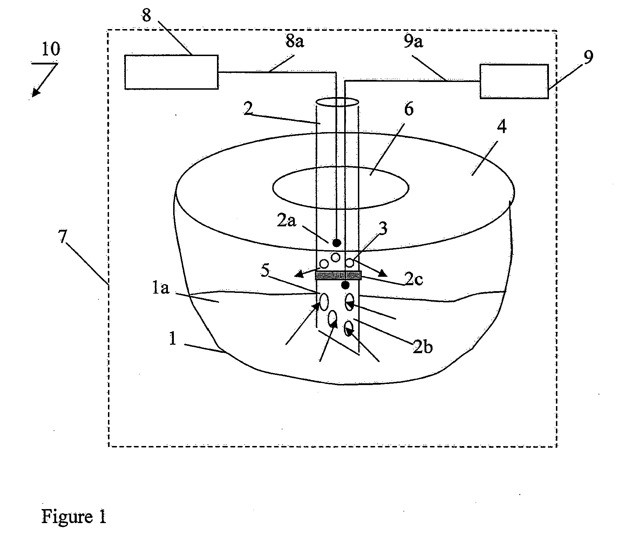

Preferably, in the device according to the invention use is made of the first container implemented as a conventional high barrier cup which can be formed by suitable per se known methods and which is filled with a suitable concentrate, paste, powder, or the like. Such cup is preferably closed with a foil and may be sealed using a suitable welding. Suitable cups have a volume between 30 ml and 100 ml, preferably 60 ml. More preferably, differently shaped cups may be used in so far that have substantially similar external diameter. It is noted that a height variation of the cups is allowable. This particular embodiment of the device according to the invention is discussed in more detail with reference to Figure 1.

Preferably, the cup is arranged with a bottom surface provided from a polystyrene (PS), polypropylene (PP), amorphous polyethylene terephtalate

(APET), or polyamide (PA) with ethylene vinyl alcohol (EVOH) functioning as a barrier. For the sealing foil following materials are preferably selected: PE, PP or a suitable lacquer, oriented polyethylene terephtalate (OPET), oriented polypropene (OPP). Oriented polyamide (OPA) may be used as a substrate material. It is also advantageous to pay due attention to tearing of the bottom surface of the cup. It is found out that PP, APET or PA are suitable materials for the bottom surface. PS may be brought in layers to present tearing. Alternatively, suitable layers of OPA, OPET, PE or PP may be brought on a layer of PS.

Preferably, the injector comprises a first portion and a second portion, said first portion and said second portion being separated from each other, the first portion being arranged for supplying the liquid in the first container, the second portion being arranged for evacuating the ready to use liquid product.

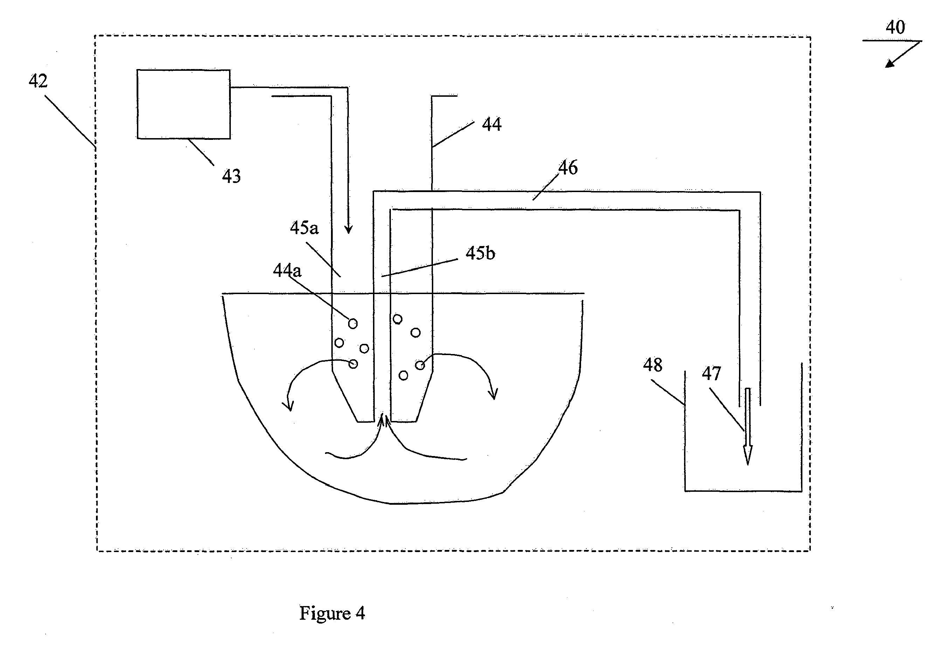

It is found to be advantageous to use separate ducts for supplying the liquid for purposes of preparing the ready to use liquid product and for evacuating the prepared liquid product from the cup. This is particularly advantageous when the device according to the invention is used for preparing liquid products having different taste characteristics. This embodiment is discussed in more detail with reference to Figure 4. It is further found that by dividing a volume of the injector into two portions, one being specifically used for supply of suitable liquid into the first container, the other being specifically arranged for evacuation of the ready to use liquid product from the first container, a compact hygienic system for preparing instant liquid food is provided, wherein contamination risks, notably bacterial contamination risks, are minimized.

Preferably, the first portion comprises first openings and the second portion comprises second openings, a diameter of the first openings being smaller than a diameter of the second openings.

Preferably, a diameter of the first openings is smaller than a diameter of the second openings. In this arrangement a semi-finished product, notably a powder, can be dissolved by a liquid emanating from the first person, notably a higher portion of the injector, whereas the openings in the second, notably a lower portion of the injector is efficiently used for evacuation of the liquid product from the first container. It is noted that by choosing the openings in the first compartment of a particularly small dimension a plurality of micro-beams of the supplied liquid can be produced. This has an advantage that the semi-finished product is better dissolved. It is noted that substantially the same effect can be reached when a small amount of openings is provided in the first portion.

More preferably, the second portion comprises a ducting means for evacuating the ready to use liquid product from the first container. In a preferred embodiment of the device according to the invention a capacity for evacuation of the ready to use liquid product is at least equal to a capacity for supplying the liquid.

In a further embodiment of the device according to the invention the first portion and the second portion are accommodated in a removably arranged end element of the injector. This feature improves hygienic properties of the device.

In a still further embodiment of the device according to the invention the device is conceived to cooperate with a closed first container, the end element comprises a punch for puncturing the first container.

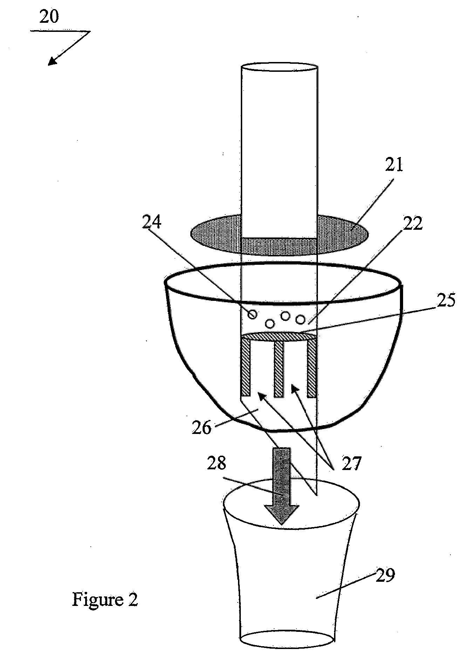

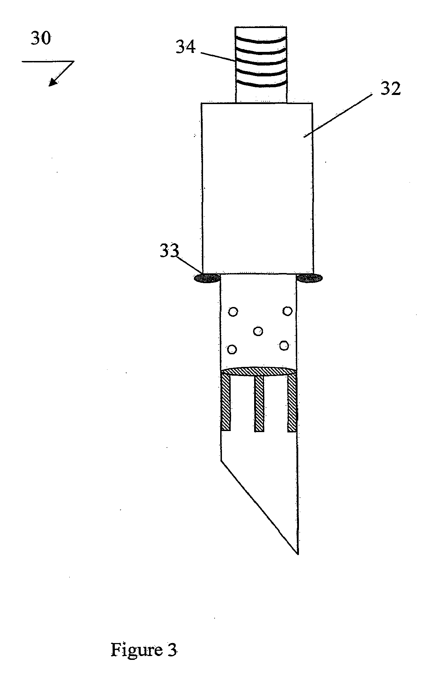

The punch may also be arranged to form a joint unity with the injector. Preferably, the punch is arranged with fastening means, like a bayonet, a screw, a groove, or the like. In this way the punch may easily be decoupled from the injector and may be suitably cleaned or replaced. Preferably, the punch is manufactured by means of injection molding of PP or high density polyethylene (HDPE). Preferably, the end element, for example the punch, is arranged with fastening means for coupling to the injector. Preferably, the punch is provided with a sealer for sealing a surface of the first container in a puncturing region. This has an advantage that the opening in the sealing foil of the first container produced by puncturing is protected from leakage by the sealer. This embodiment of the device is further explained with reference to Figures 2 and 3.

In a further embodiment of the device according to the invention the punch is arranged to protrude through the first container, This embodiment has an advantage in that a simple and hygienic system is provided for preparing the liquid product and for safely evacuation the liquid product in the second container. Preferably, the device is arranged with a holder to secure the cup during puncturing. More preferably the holder is arranged to ease the protrusion of the punch through the first container, for example by suitably supporting the cup. Preferably, the first container is arranged with a centering means conceived to cooperate with the punch. More preferably, the device further comprising a holder for the first container, the holder and the first container being arranged to be complementary in shape. This feature improves mechanical stability of the cup, particularly during puncturing. Preferably, the first container makes part of the device according to the invention.

Preferably, the first container is manufactured from a thermoplastic material. It is found to be particularly advantageous to arrange the first container with a centering means conceived to cooperate with the injector or the punch. Due to this feature mechanical stability of the first container during puncturing is enabled preventing spilling of the ready to use liquid product. The first container may be arranged with a tenuous region at the bottom portion for enabling easy protrusion therethrough.

In a further embodiment of the device according to the invention, the device is arranged with a filter, preferably a bacterial filter for intercepting the liquid flow directed into the first container or into the second container. This embodiment is particular advantageous for preparing liquid products whereto increased hygienic requirements apply. Suitable examples of such products comprise infant formulae. The bacterial filter may be arranged in the injector, in particular in the punch, or, additionally or alternatively, in a liquid supply lining from a source of liquid to the injector, or, alternatively, in a duct from the punch to the second container. Preferably, the device according to the invention also comprises the second container. In this case the device may further comprise a holder for the first container, the holder and the first container being arranged to be complementary in shape. The first container may further comprises a projection enabling a suitable handling of the first container

It is noted that the device according to the invention is particularly suitable for preparing infant food, instant coffee, or an extract. The semi-finished product thus may relate to any one of product comprising the infant formulae, instant coffee, or an ingredient for an extract. Preferably, the liquid is water, preferably with a temperature between 30 °C and 90 °C. In an example of the device according to the invention, the device may comprise the second container.

A method for preparing a ready to use liquid product from a semi-finished product according to the invention comprises the steps of: providing the ready to use liquid product by supplying an amount of liquid in the first container using an injector,
evacuating the ready to use liquid product from the first container into the second container using the injector.

Preferably the method according to the invention further comprises the step of providing an end element on the injector, said element comprising a first portion for supplying the liquid and a second portion for evacuating the liquid product, the said second portion being separated from the first portion.

Preferably, the method according to the invention further comprises the step of protruding the first container with the punch arranged on an end element of the injector. More preferably, the method according to the invention further comprises the step of providing a filter, preferably a bacterial filter for intercepting the liquid flow directed into the first container.

It is noted that in the method of the invention for the semi-finished product any one of the infant formulae, instant coffee, or extract may be selected, whereas water, preferably with a temperature between 30 °C and 90 °C may be selected for the liquid.

### BRIEF DESCRIPTION OF THE DRAWINGS

These and other aspects of the invention will be discussed in further details with reference to drawings.
Figure 1 presents a schematic view of an embodiment of a device according to the invention.
Figure 2 presents a schematic view of an embodiment of a punch conceived to be used with the injector of the device according to the invention.
Figure 3 presents a schematic view of a further embodiment of the punch according to the invention.
Figure 4 presents a schematic view of a further embodiment of the device according to the invention.
Figure 5 presents a schematic view of a first container conceived to be used in a device according to the invention.

### DETAILED DESCRIPTION

Figure 1 presents a schematic view of an embodiment of a device 10 for preparing a ready to use liquid product from a semi-finished product according to the invention. The device 10 comprises a housing 7 wherein a reservoir 8 comprising a suitable liquid may be arranged. Preferably, water is selected for the suitable liquid. For example, in case when the device 10 is arranged for preparing instant baby food from a suitable infant formulae, the reservoir 8 may be arranged with a suitable heating means (not shown) for heating the liquid, notably water, to a suitable temperature. Preferably, the temperature is selected in the range of 35 - 40 degrees Celsius, notably around 37 degrees Celsius. The device 10 further comprises a cup 1 arranged with a semi-finished product 1a conceived to be used to from a ready to use liquid product. The cup 1 is provided with a seal foil 4 for sealing the interior of the cup 2 from interaction with ambient atmosphere. The cup may be closed in any other suitable way. The apparatus 10 according to the invention further comprises an injector 2 whereto a punch (not shown) can be fixed. It is also noted that an end portion of the injector may be shaped to form a suitable punch instead. It is noted that in a preferred embodiment the punch is removably arranged on the injector and can be attached to the injector for convenience and hygienic reasons. The injector 2 may be arranged to form a fixed portion of the device 10. Alternatively, the injector 2 may be removable. The injector 2 is arranged in liquid communication with the reservoir 8 by means of a suitable conduct 8a. Preferably, the reservoir 8 and /or the conduct 8a comprise a filter, notably a bacterial filter, arranged for eliminating bacteria and/or other microorganisms from entering into the cup 1. This feature is of particular advantage for cases when the device 10 according to the invention is used for preparing suitable baby nutrition.

The injector 2 may be arranged with an at least somewhat sharpened nozzle to ease penetration into the cup 1. The puncturing hole 6 in the seal foil (showed in exaggerated dimension with respect to the injector 2) may be protected by a sealer shown in Figure 2 or 3. The injector 2 is preferably divided into two portions 2a and 2b, respectively, the first portion 2a and said second portion 2b being not in direct liquid communication with each other. The first portion is arranged with first openings 3 for supplying the liquid in the first container, the second portion 2b being arranged with second openings 5 for evacuating the ready to use liquid product. The first portion 2a is separated from the second portion 2b by means of a wall 2c.

In operation, the liquid flows, preferably under pressure, into the volume of the cup 1 through the openings 3 thereby interacting with the semi-finished product 1a. The ready to use liquid product is thus prepared. The said liquid product is then evacuated from the cup 1 by means of the second openings 5 and via the duct 9a to the second container 9. Suitable example of the second container comprises a bottle, a cup or any other suitable reservoir for receiving the said liquid product. It should be understood, therefore, that the first container comprises a semi-finished product that is readily dissolvable or dispersible in a liquid, notably in water. Upon an event the injector 2 protrudes the first container and, for example hot water starts to pour out of the holes 3, the liquidified contents of the cup 1 is preferably completely removed from the cup 1, contrary to conventional extraction devices wherein the first container remains filled with extracted material. The liquidifying process preferably occurs at low pressure due to open connection between the portion 2b and the second container 9. It is further noted that for the present invention the term 'semi-finished' comprises any substance in any aggregate state able of liquidifying upon interaction with liquid, preferably with water, more preferably with hot water. It must be further understood that the second container may be not a fixed part of the device 10, but, instead, a bottle, a cup or the like which can be put in the device 10 when empty and, after filling, can be removed and equipped with suitable means, for example a teat, to aid suitable administration to a person, for example a patient, a baby, an exercising athlete, or to any other suitable recipient.

Figure 2 presents a schematic view of an embodiment of a punch conceived to be used in the device according to the invention. The punch 20 comprises a first portion 22 provided with the first openings 24 and the second portion 26 provided with the ducts 27. The ducts 27 may preferably be formed in a suitable wall 25 arranged to separate the first portion 22 of the punch from the second portion of the punch. In this particular embodiment the punch 20 is arranged with a sealer 21 for protecting a puncture hole (not shown) produced in the cup 23 from leakage. The punch 20 is arranged with openings 24 in the first portion 22 of the punch and exit channels 27 in the second portion 26 of the punch. In this particular embodiment the punch 20 is arranged to protrude through the cup 23 thereby providing a direct access to the ready to use liquid 28 for entering the second reservoir. It is noted that in case the punch 20 is arranged with compartments and other suitable means to separate the supplied liquid flow from the flow of the prepared liquid product, it is not necessary to provide similar means on a portion of the injector the punch 20 is conceived to be attached to.

Figure 3 presents a schematic view of a further embodiment of the punch 30. The punch 30 ix provided with fastening means 34 for coupling the punch 30 to the injector (not shown). The fastening means may comprise a screw 34, or any other equivalent means like bayonet or a groove. Also a modification of the sealer 33 is shown. In this particular embodiment the sealer 33 comprises a ring, arranged tightly around the punch 30. In order to fix the ring 33 with respect to the body of the punch 30, the punch may be provided with projections 35, preferably dimensioned at least to correspond with a thickness of the sealer ring 33. Preferably, the sealer is manufactured from suitable tuber.

Figure 4 presents a schematic view of a further embodiment of the device 40 according to the invention. The device 40 comprises a housing 42 wherein a reservoir 43 with a suitable liquid is arranged. The liquid is conducted to the injector module 44 by means of a suitable duct 43a. In accordance with the embodiments discussed with respect to the foregoing, the injector module 44 is arranged to project into a volume of the cup 41 comprising the semi-finished product (not shown). The injector module 44 is provided with openings 44a for enabling the liquid to escape. The ready to use liquid product is formed whereafter the said product 47 enters into the ducting means 46 provided in the volume of the punch 44 for evacuating the said liquid product 47 from the first container 41 into the second container 48. It is noted that ducting means 46 may comprise a bacterial filter. This is particularly advantageous in case when the device according to the invention is used to prepare instant baby formulae. It is further noted that portions 45a, 45b may be recognized in the injector module 44. The portions 45a, 45b are arranged to be not in a direct liquid communication with each other, the first portion 45a being arranged with first openings for supplying the liquid in the first container, the second portion being arranged with a duct 46 for evacuating the ready to use liquid product into the second container 48.

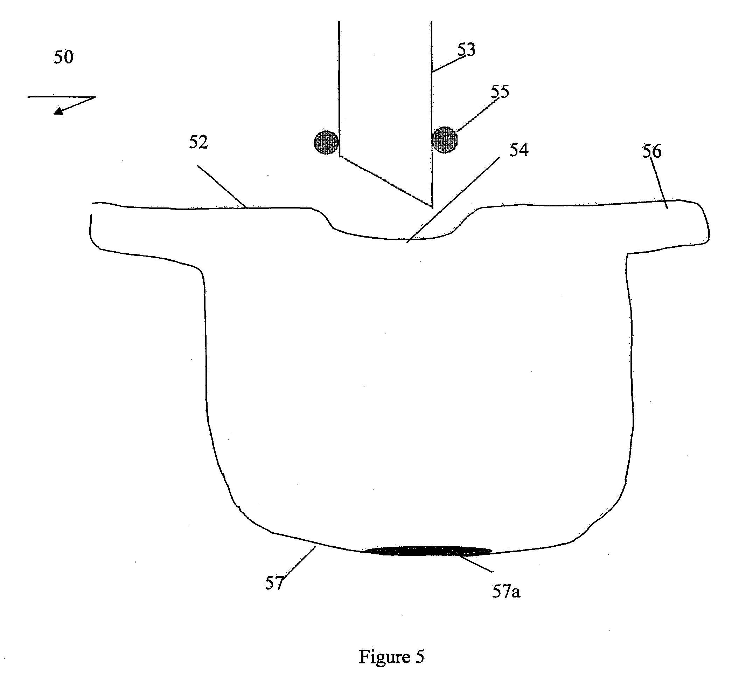

Figure 5 presents a schematic view of a first container 50 according to the invention. The first container 50 may preferably be arranged with an excess 54 arranged to be substantially supplementary with the injector or the punch 53 provided with a sealer ring 55. Preferably, the cup 50 is arranged with a tenuous region 57a at the bottom surface 57 to enable simplified protrusion by the injector or the punch 53 through the bottom surface 57, as is explained with reference to Figure 3, Preferably, the cup 50 comprises at least one projection 56, 52 arranged to enable easy handling of the cup 50.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

## Claims

1. A device for preparing a ready to use liquid product from semi-finished product arranged in a first container, the device comprising an injector for supplying an amount of liquid in the first container thereby providing the ready to use liquid product, wherein
the injector is further arranged for evacuating the ready to use liquid product from the first container into a second container.

2. A device according to Claim 1, wherein the injector comprises a first portion and a second portion, said first portion and said second portion being separated from each other, the first portion being arranged for supplying the liquid in the first container, the second portion being arranged for evacuating the ready to use liquid product.

3. A device according to Claim 2, wherein the first portion comprises first openings and the second portion comprises second openings, a diameter of the first openings being smaller than a diameter of the second openings.

4. A device according to Claim 2 or 3, wherein the second portion comprises a ducting means for evacuating the ready to use liquid product from the first container.

5. A device according to any preceding Claim 2-4, wherein the first portion is separated from the second portion by means of a wall.

6. A device according to any one of the preceding Claims, wherein a capacity for evacuation of the ready to use liquid product is at least equal to a capacity for supplying the liquid.

7. A device according to any one of the preceding Claims, wherein the first portion and the second portion are accommodated in a removably arranged end element of the injector.

8. A device according to any one of the preceding Claims, wherein the end element is arranged with fastening means for coupling to the injector.

9. A device according to Claim 8, wherein the device is conceived to cooperate with a closed first container, the end element comprises a punch for puncturing the first container.

10. A device according to Claim 9, wherein the punch is provided with a sealer for sealing a surface of the first container in a puncturing region.

11. A device according to any one of the preceding Claims 7 - 10, wherein the end element is disposable.

12. A device according to any one of the preceding Claims wherein the device is arranged with a filter, preferably a bacterial filter for intercepting the liquid flow directed into the first container or into the second container.

13. A device according to any one of the preceding Claims, further comprising the first container.

14. A device according to Claim 13, wherein the injector or the punch are arranged to protrude through the first container.

15. A device according to Claim 13 or 14, wherein the first container is manufactured from a thermoplastic material.

16. A device according to any one of the preceding Claims 13 - 15, wherein the first container is arranged with a centering means conceived to cooperate with the injector or the punch.

17. A device according to any one of the preceding Claims 13 - 16, wherein the first container is arranged with a tenuous region at the bottom portion for enabling easy protrusion therethrough.

18. A device according to any one of the preceding Claims, wherein the device further comprises a holder for the first container, the holder and the first container being arranged to be complementary in shape

19. A device according to any one of the preceding Claims, wherein the first container comprises a projection enabling handling of the first container

20. A device according to any one of the preceding Claims, wherein the semi-finished product comprises any one of the infant formulae, instant coffee, or an ingredient for an extract.

21. A device according to any one of the preceding Claims, wherein the liquid is water, preferably with a temperature between 30 °C and 90 °C,

22. A device according to any one of the preceding Claims, further comprising the second container

23. A method for preparing a ready to use liquid product from a semi-finished product arranged m a first container, the method comprising the steps of:
providing the ready to use liquid product by supplying an amount of liquid in the first container using an injector,
evacuating the ready to use liquid product from the first container into the second container using the injector.

24. A method according to Claim 23, further comprising the step of:
providing an end element on the injector, said element comprising a first portion for supplying the liquid and a second portion for evacuating the liquid product, the said second portion being separated from the first portion.

25. A method according to Claim 23 or 24, further comprising the step of protruding the first container with the end element.

26. A method according to any one of the preceding Claims 23 to 25, further comprising the step of providing a filter, preferably a bacterial filter for intercepting the liquid flow directed into the first container or into the second container.

27. A method according to any one of the preceding Claims 23 to 26, wherein for the semi-finished product any one of the infant formulae, instant coffee, or an extract ingredient is selected.

28. A method according to any one of the preceding Claims, wherein water, preferably with a temperature between 30 °C and 90 °C is selected for the liquid.
